# EUROPEAN PATENT SPECIFICATION

(11) **EP 0 427 728 B1**
(45) Date of publication and mention of the grant of the patent: **02.03.1994**
(21) Application number: 89905235.1
(22) Date of filing: 26.04.1989
(51) Int. Cl.: F16H 1/40

(54) **DIFFERENTIAL WITH FOUR PINION GEARS**
DIFFERENTIAL MIT VIER AUSGLEICHSRÄDERN
DIFFERENTIEL A QUATRE PIGNONS D'ENGRENAGE

(30) Priority: 28.04.1988 SE 8801608
(43) Date of publication of application: 22.05.1991
(73) Proprietor: SAAB AUTOMOBILE AKTIEBOLAG, 461 80 Trollhättan (SE)
(72) Inventor: NORDKVIST, Kjell, S-151 57 Södertälje (SE); HULT, Lars, S-646 00 Gnesta (SE)
(74) Representative: Holmborn, Erland Karl
(86) International application number: SE8900231
(87) International publication number: WO8910501

(56) References cited:
- US-A- 2 566 601
- US-A- 3 653 280
- US-A- 3 894 447
- US-A- 4 363 248

## Description

The invention relates to a differential gearing, especially for motor vehicles, in which a differential housing, made in one piece and provided with a crown wheel, has in its wall, on the one hand, two opposite side openings via which the pinion gears and side gears of the differential can be introduced into and removed from the differential housing, and, on the other hand, two opposite bearing points situated between the side openings and intended for a first pinion gear shaft provided with two pinion gears, in which respect the axis of the first pinion gear shaft is oriented at right angles to the axis of rotation of the differential housing, the differential also includes a second pinion gear shaft which is provided with two pinion gears and for which the bearing points are arranged in two bearing parts, which are each detachably fixed in the side openings and are guided relative to the differential housing by means of guide members on the latter.

Differentials of this type are often used in motor vehicles of the passenger car type, where the torque to be transmitted is fairly small. Designing the differential housing in one piece provides for a compact construction which requires little space and can be produced relatively inexpensively and simply. However, the disadvantage is that the torque transmission capacity is limited.

When higher torques are to be transmitted, it is possible per se to increase the dimensions of the differential. However, for reasons of space this is often impossible or undesirable. A commonly used solution is to instead increase the number of pinion gears. Examples of such solutions are described in US-A-3,593,595 and 3,974,717. In both cases use is made of four pinion gears which are supported by two pinion gear shafts assembled to form a cross, in which respect the differential housing is designed in such a way that four bearing points, designed in the form of holes, are accommodated in its wall for the four shaft ends of the cross. This therefore means that a specially designed differential housing has to be used, whose wall is more continuous all round. This reduces the available space for the side openings via which the side gears and pinion gears can be introduced into and removed from the differential housing, and this makes assembly and disassembly of the differential more difficult.

In order to facilitate the assembly and disassembly of differentials with four pinion gears, it is also known to design the differential housing in two parts, in which respect the dividing plane is usually located in the plane in which are situated the pinion gear shafts assembled to form a cross. However, such a construction is more complicated and expensive.

Yet another differential is known from US-A-3,653,280, wherein a differential housing made in one piece and receiving a pinion shaft supporting a pair of pinion gears is converted to a four pinion differential by using an additional pinion shaft having a cross-bore therein so that the additional pinion shaft encircles and is carried only by the first pinion shaft. The torque transmission capacity is only improved to a minor extent since the additional pinion gears are mounted on the non-supported free ends of the additional pinion shaft.

The aim of the invention is to eliminate the disadvantages of the known differentials and to provide a simple and, thus, inexpensive differential with four pinion gears, with improved torque transmission capacity.

According to the invention, this is achieved in a differential of the type mentioned at the outset by virtue of the fact that the guide members of the differential housing are made up of guide surfaces arranged at the edge of the side openings, and in that the bearing parts are provided with corresponding guide surfaces, the guide surfaces having a generatrix parallel to the axis of the second pinion gear shaft, in which respect the guide surfaces of the differential housing are preferably formed by draw broaching.

Such a design has the great advantage that a differential housing of the standard type, intended for two pinion gears, can easily be modified by a simple operation, and, at the same time, necessary extra components are simple to manufacture and to assemble. A further advantage is that the torque transmission capacity is improved without increasing the space requirements.

The invention will be illustrated in greater detail below on the basis of an exemplary embodiment shown in the attached drawing, in which:
Fig. 1 shows a side view of a differential according to the invention, and
Fig. 2 shows a section along the line II-II in Fig. 1.

A differential 1 according to the invention has a differential housing 2 which is made in one piece and is provided with a round flange 3 on which a crown wheel 4 is fixed by means of a number of bolts 5. The crown wheel 4 is, in a conventional manner, in engagement with a drive pinion (not shown) mounted on a propeller shaft, by which means the crown wheel 4 can be rotated together with the differential housing 2 around the axis of rotation 6 of the differential housing. Two output shafts 7 and 8 are rotatably mounted in a conventional manner on the differential housing 2 and can therefore be caused to rotate, if appropriate at different speeds.

Given that the general construction of the differential is well known, for example from both US-A-3,593,595 and 3,974,717 mentioned in the introduction and also from a number of manuals, the following description deals only with those parts of the differential which are essential for an understanding of the invention.

The differential housing 2 has, in its wall 9, two relatively large, opposite side openings 10, via which components, which are to be accommodated in the differential housing, can be introduced into and removed from the differential housing This type of differential housing represents a standard type within, for example, the motor car industry.

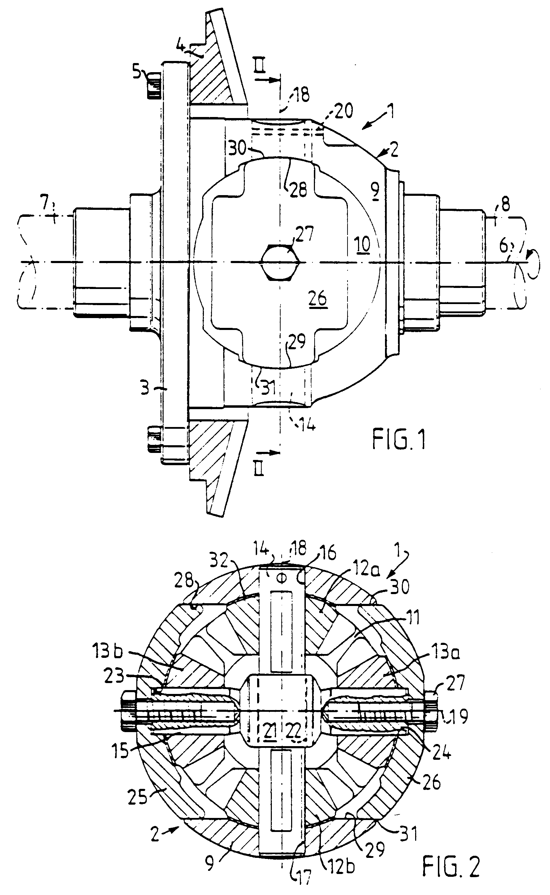

The output shaft 8 is connected in a conventional manner, fixed in terms of rotation, to a side gear (11) mounted rotatably in the differential housing 2 (see Fig. 2), and the latter is in turn in engagement with four pinion gears 12a, 12b, 13a and 13b, which are rotatably mounted in pairs on a first pinion gear shaft 14 and a second pinion gear shaft 15, respectively. In a corresponding manner, a side gear (not shown), connected fixed in terms of rotation to the output shaft 7, is in engagement with the pinion gears 12a, 12b, 13a and 13b. The first pinion gear shaft 14 is mounted in the differential housing 2 via two bearing points 16 and 17 designed as holes in the wall 9 of the housing The axis 18 of the first pinion gear shaft 14 forms a right angle to the axis of rotation 6 of the differential housing and also forms a right angle to the axis 19 of the second pinion gear shaft. The first pinion gear shaft 14 is locked in the differential housing 2 by means of a locking device 20 in the form of a pin.

As regards the second pinion gear shaft 15, which has an enlarged central section 21 with a continuous hole 22 for the first pinion gear shaft 14, bearing points 23 and 24 are arranged in two bearing parts 25 and 26, respectively, which are detachably fixed in each side opening 10. The bearing points 23 and 24 here have the form of blind holes, in which the ends of the second pinion gear shaft 15 touch the bottom. The bearing parts 25 and 26 are each fixed in the axial direction on the second pinion gear shaft 15 by means of a fastening member 27 in the form of a bolt.

At each side opening 10 the differential housing 2 is provided with guide members 28 and 29, which guide the associated bearing part 25 or 26. These guide members are advantageously made up of guide surfaces arranged at the edge of each respective side opening 10, which guide surfaces, in the exemplary embodiment shown, have a generatrix parallel to the axis 19 of the second pinion gear shaft 15 and are expediently produced by means of draw broaching. The bearing parts 25 and 26 are provided with corresponding guide members 30, 31 in the form of guide surfaces.

In the exemplary embodiment shown, at each side opening 10 there are two guide members which are designed as curved surfaces and are situated opposite each other in the circumferential direction of the differential housing. However, it is of course possible to design and position the guide members otherwise, just as it is possible to have another number of guide members. However, the design and positioning shown allows the guide members to be obtained by means of an extremely simple working operation, for example by draw broaching. Moreover, the illustrated positioning of the guide members provides for an advantageous power transmission between the bearing parts and the differential housing.

In order to achieve as even a contour as possible, it is expedient, as shown in the drawing, for the outside of the bearing parts 25, 26 to be situated essentially level with the outside of the differential housing. The second pinion gear shaft 15 is advantageously made in one piece, but it is also possible to divide the shaft up into several parts, for example analogously to what is shown in the two previously mentioned US-A-3,593,595 and 3,974,717.

When assembling the differential shown, it is expedient first to assemble the two side gears in the differential housing after which the pinion gears 12a and 12b are expediently assembled, it being ensured that a liner 32 is put into position as a support for each pinion gear. Thereafter, the two pinion gear shafts 14 and 15 are assembled, then the pinion gears 13a and 13b, and, finally, the two bearing parts 25 and 26, which are thereafter fixed. Disassembly takes place in the reverse order.

## Claims

1. Differential, especially for motor vehicles, in which a differential housing (2), made in one piece and provided with a crown wheel, has in its wall (9), on the one hand, two opposite side openings (10) via which the pinion gears and side gears of the differential can be introduced into and removed from the differential housing, and, on the other hand, two opposite bearing points (16, 17) situated between the side openings (10) and intended for a first pinion gear shaft (14) provided with two pinion gears (12a, 12b), in which respect the axis (18) of the first pinion gear shaft (14) is oriented at right angles to the axis of rotation (6) of the differential housing, the differential also includes a second pinion gear shaft (15) which is provided with two pinion gears (13a, 13b) and for which the bearing points (23, 24) are arranged in two bearing parts (25, 26), which are each detachably fixed in the side openings and are guided relative to the differential housing by means of guide members (28, 29) on the latter, **characterized in** that the guide members (28, 29) of the differential housing are made up of guide surfaces arranged at the edge of the side openings (10), and in that the bearing parts (25, 26) are provided with corresponding guide surfaces (30, 31), the guide surfaces (28 - 31) having a generatrix parallel to the axis (19) of the second pinion gear shaft (15), in which respect the guide surfaces (28, 29) of the differential housing are preferably formed by draw broaching.

2. Differential according to Claim 1, **characterized in** that at each side opening (10) there are two guide surfaces (28, 29) which are situated opposite each other in the circumferential direction of the differential housing.

3. Differential according to any one of Claims 1 - 2, **characterized in** that the bearing parts (25, 26) are mounted axially displaceable on the second pinion gear shaft (15).

4. Differential according to Claim 3, **characterized in** that in each bearing part (25, 26) the bearing point (23, 24) for the second pinion gear shaft (15) consists of a blind hole matching its one end at the bearing part, and in that the bearing parts are each connected to the second differential gear shaft via a fastening member (27).

5. Differential according to any one of Claims 1 - 4, **characterized in** that the second pinion gear shaft (15) has an enlarged central section (21) in which there is a hole (22) for the first pinion gear shaft (14).

6. Differential according to Claim 5, **characterized in** that the second pinion gear shaft (15) is made in one piece.

7. Differential according to any one of Claims 1 - 6, **characterized in** that the outside of the bearing parts (25, 26) is located essentially level with the outside of the differential housing (2).

## Patentansprüche

1. Differential, insbesondere für Kraftfahrzeuge, bei dem ein einteilig ausgebildetes und mit einem Tellerrad versehenes Differentialgehäuse (2) in seiner Wand (9) einerseits zwei sich gegenüberliegende Seitenöffnungen (10), über welche die Zahnritzel und Seitenräder des Differentials in das Differentialgehäuse eingeführt und aus ihm entfernt werden können, und andererseits zwei sich gegenüberliegende Lagerstellen (16, 17) aufweist, die zwischen den Seitenöffnungen (10) angeordnet und für eine erste, mit zwei Zahnritzeln (12a, 12b) versehene Ritzelwelle (14) bestimmt sind, wobei die Achse (18) der ersten Ritzelwelle (14) rechtwinklig zur Drehachse (6) des Differentialgehäuses ausgerichtet ist, das Differentialgehäuse ebenfalls eine zweite Ritzelwelle (15) aufweist, die mit zwei Zahnritzeln (13a, 13b) versehen ist und für die die Lagerstellen (23, 24) in zwei Lagerteilen (25, 26) angeordnet sind, welche in den Seitenöffnungen wegnehmbar befestigt und in bezug auf das Differentialgehäuse durch Führungsteile (28, 29) auf dem Differentialgehäuse geführt sind, dadurch **gekennzeichnet,** daß die Führungsteile (28, 29) des Differentialgehäuses von Führungsflächen gebildet sind, die am Rand der Seitenöffnungen (10) angeordnet sind, und daß die Lagerteile (25, 26) mit entsprechenden Führungsflächen (30, 31) versehen sind, wobei die Führungsflächen (28 bis 31) eine zur Achse (19) der zweiten Ritzelwelle (15) parallele Erzeugende besitzen, dabei die Führungsflächen (28, 29) des Differentialgehäuses vorzugsweise durch Ziehräumen ausgebildet sind.

2. Differential nach Anspruch 1, dadurch **gekennzeichnet,** daß an jeder Seitenöffnung (10) zwei Führungsflächen (28, 29) vorhanden sind, die in der Umfangsrichtung des Differentialgehäuses sich gegenüberliegend angeordnet sind.

3. Differential nach einem der Ansprüche 1 und 2, dadurch **gekennzeichnet,** daß die Lagerteile (25, 26) auf der zweiten Ritzelwelle (15) axial verschiebbar angeordnet sind.

4. Differential nach Anspruch 3, dadurch **gekennzeichnet,** daß in jedem Lagerteil (25, 26) die Lagerstelle (23, 24) für die zweite Ritzelwelle (15) aus einem Blindloch besteht, das an ihr eines Ende am Lagerteil angepaßt ist, und daß die Lagerteile je mit der zweiten Differentialradwelle über ein Befestigungsmittel (27) verbunden sind.

5. Differential nach einem der Ansprüche 1 bis 4, dadurch **gekennzeichnet,** daß die zweite Ritzelwelle (15) einen vergrößerten Mittelabschnitt (21) umfaßt, in der ein Loch (22) für die erste Ritzelwelle (14) vorhanden ist.

6. Differential nach Anspruch 5, dadurch **gekennzeichnet,** daß die zweite Ritzelwelle (15) einteilig ausgebildet ist.

7. Differential nach einem der Ansprüche 1 bis 6, dadurch **gekennzeichnet,** daß die Außenseite der Lagerteile (25, 26) im wesentlichen bündig mit der Außenseite des Differentialgehäuses (2) angeordnet ist.

## Revendications

1. Différentiel, en particulier pour véhicules automobiles, dans lequel un carter de différentiel (2) réalisé en une pièce, et pourvu d'une couronne comprend, dans sa paroi (9), d'une part, deux ouvertures latérales opposées (10) à travers desquelles les pignons planétaires et les pignons satellites du différentiel peuvent être introduits à l'intérieur et retirés du carter de différentiel et, d'autre part, deux portées d'appui opposées formant palier (16, 17) situées entre les ouvertures latérales (10) et prévues pour un premier arbre porte-pignon (14), pourvu de deux pignons (12a, 12b), l'axe (18) du premier arbre porte-pignon (14) étant, à cet égard, orienté perpendiculairement à l'axe de rotation (6) du carter de différentiel, le différentiel comprenant également un second arbre porte-pignons (15), pourvu de deux pignons (13a, 13b), et pour lesquels les portées d'appui formant palier sont agencées dans deux éléments de palier (25, 26), chacun d'eux étant fixé de façon amovible dans les ouvertures latérales et étant guidé par rapport au carter de différentiel au moyen des éléments de guidage (28, 29) de ce dernier, caractérisé en ce que les éléments de guidage (28, 29) du carter de différentiel sont constitués par des surfaces de guidage agencées sur le bord des ouvertures latérales (10) et en ce que les éléments de palier (25, 26) sont pourvus de surfaces de guidage correspondantes (30, 31), les surfaces de guidage (28, 31) ayant une génératrice parallèle à l'axe (19) du second arbre porte-pignons (15), les surfaces de guidage (28, 29) du carter de différentiel étant, à cet égard, formées, de préférence par brochage par étirage.

2. Différentiel selon la revendication 1, caractérisé en ce qu'il est prévu dans chaque ouverture latérale (10) deux surfaces de guidage (28, 29) disposées en opposition l'une par rapport à l'autre dans la direction circonférentielle du carter de différentiel.

3. Différentiel selon l'une quelconque des revendications 1 ou 2, caractérisé en ce que les éléments de palier (25, 26) sont montés axialement et déplaçables sur le second arbre porte-pignons (15).

4. Différentiel selon la revendication 3, caractérisé en ce que dans chaque élément de palier (25, 26) la portée d'appui (23, 24) du second arbre porte-pignons (15) consiste en un trou borgne dont une extrémité vient en correspondance avec l'élément de palier et en ce que les éléments de palier sont chacun d'eux reliés au second arbre porte-pignons de différentiel par l'intermédiaire d'un élément de fixation (27).

5. Différentiel selon l'une quelconque des revendications 1 à 4, caractérisé en ce que le second arbre porte-pignons (15) comprend une partie centrale agrandie (21) dans laquelle il est ménagé un trou (22) pour le premier arbre porte-pignons (14).

6. Différentiel selon la revendication 5, caractérisé en ce que le second arbre porte-pignons (15) est réalisé en une pièce.

7. Différentiel selon l'une quelconque des revendications 1 à 6, caractérisé en ce que l'extérieur des éléments de palier (25, 26) est situé sensiblement au niveau de l'extérieur du carter de différentiel (2).
